# EUROPEAN PATENT APPLICATION

(11) **EP 4 091 439 A1**
(43) Date of publication of application: **23.11.2022**
(21) Application number: 21175300.9
(22) Date of filing: 21.05.2021
(51) Int. Cl.: A01G 9/24, A01G 31/02

(54) **MOUNTING SYSTEM FOR A HYDROPONIC SYSTEM**

(71) Applicant: BSH Hausgeräte GmbH, 81739 München (DE)
(72) Inventor: Dornik, Primoz, 3270 Lasko (SI); Holcinger, Tadej, 3220 Store (SI)

(57) **Abstract**

Mounting system component (1) for a hydroponic system (100) comprising:
- a PCB element (22),
- a PCB element holder (2) configured to receive the PCB element (22),
- a cover (3),
- a housing (4) configured to receive the PCB element holder (2) with the PCB element (22),
characterised in that the mounting system component (1) comprises a coupling element (21) and a counter-coupling element (41) configured to establish a releasable connection.

## Description

### Background of the invention

The present invention relates to a hydroponic system, more particularly to a mounting system component and a mounting system for a hydroponic system.

### State of the Art

Hydroponic systems are becoming ever popular. More so as since a couple of years they have been suitable also for home gardening. For the purposes of this application by home gardening is meant indoor cultivation of plants. People use home indoor gardening for various reasons: stress reduction, air purification, decoration, growing spices, microgreens, herbs and other plants which can be used for cooking. There exist advanced hydroponic systems with smart (automatic) monitoring and control of parameters affecting growth and health of plants. These parameters include but are not limited to water, light and nutrients.

In known hydroponic systems plants grow in a substrate which in most cases are clay balls, rockwool or coconut fibres. The substrate is placed in capsules. The capsules are arranged in a plant tray. Water contained in a watering tank is supplied to the capsules by means of a pump. In order to provide sufficient light to the plants (artificial) lighting is needed. It is realized by a lighting assembly being positioned above the plant tray containing the capsules. In most cases the lighting assembly is formed by LEDs which specifically come in RGB colour combination, i.e. red, green and blue.

It is known it the art to support the lighting assembly by means of a pillar or a column constituted of so called height modules (mounting system components). These modules are connected to each other successively as the plant grows and goes through different growth phases. Consequently, height of the lighting assembly gets bigger. The pillar can be positioned centrally with relation to the plant tray.

This has the drawback that not the whole plant tray can be used for arranging capsules and growing plants.

The solution is to position the pillar outside of the plant tray - on its side or a circumference. That being said, also the lighting assembly is now supported from the side. The lighting assembly can be quite big and heavy as it contains several LEDs and electronic components (control unit etc.). In case of increased height (many height modules connected) the lighting assembly and the pillar can lean to the side. This means the plants don't get enough light for growth. In the worst case stability of the whole system is jeopardized to the extent it can overturn and make water leak from the system. The consequences can be quite severe - a flooded surface where the hydroponic system is positioned, damage to the plant(s) and/or the system.

### Problem to be solved

It is an object of the present invention to overcome the above-mentioned shortcomings of the prior art and particularly to improve a mounting system component and a mounting system for a hydroponic system. The mounting system component and the mounting system should also ensure efficient, safe and comfortable use of the hydroponic system.

### Solution according to the invention

The object is achieved by the mounting system component according to the features of claim 1 and the mounting system according to the features of claim 14.

Advantageous embodiments that can be implemented by themselves or in combination are described in dependent claims.

The invention relates to a mounting system component for a hydroponic system comprising:
- a PCB element,
- a PCB element holder configured to receive the PCB element,
- a cover,
- a housing configured to receive the PCB element holder with the PCB element, characterised in that the mounting system component comprises a coupling element and a counter-coupling element configured to establish a releasable connection.

The mounting system component according to the invention provides the following advantages:
- stiffer (more firm) connection between the mounting system components,
- compact integration of a mounting system and a electrical connection,
- no need for a force-fitting or material engagement (screwing, glueing or welding) which provides for a quicker assembly and lower costs of production,
- an audible signal (»click«) confirming the connection between the mounting system components is stable and firm,
- easy combination of ordinary mounting system components and mounting system components provided with lighting.

Further to above advantages the mounting system comprising the mounting system components according to the invention is advantageous as it provides
- more space for capsules and growing plants (arrangement outside of a plant tray on the side of the base).

### Embodiments of the invention

According to one preferred embodiment, the coupling element forms part of the PCB element holder.

In a preferred embodiment, the counter-coupling element forms part of the housing.

In an advantageous solution, the coupling element is provided with a reinforcing means. In this way, a stiffer (more firm) connection between the mounting system components can be made.

Optionally, the reinforcing means is a U-formed spring, preferably made of metal.

In an advantageous solution, the coupling element is integral with the PCB element holder. The effect is that no attaching means is needed and the production costs can be reduced.

Advantageously, the counter-coupling element comprises at least one recess and an anchoring element. This provides for a compact connection between the components.

Optionally, the coupling element comprises at least one hookalike portion. This portion is intended to engage with the anchoring element to make a connection.

The PCB element can comprise at least one electrical connector to establish an electric connection for a power supply to the lighting assembly.

According to another embodiment of the invention, the cover comprises at least one opening. The effect is that the mounting system component can be configured to provide light for the plants.

Typically, the PCB element comprises at least one light source, preferably facing the opening.

Advantageously, the light sources are of different colour. Thus, all combinations of basic light components of red, green and blue can be generated.

Preferably, the light source is a LED. In this way power consumption can be reduced.

According to one preferred embodiment, mounting system comprises at least one mounting system component comprising a cover and/or at least one mounting system component comprising a cover with an opening. Combinations of the mounting system components are optional. Thus, all the embodiments can be combined.

According to one embodiment, hydroponic system comprises a watering tank, a plant tray, a lighting assembly and a mounting system comprising the mounting system components.

A PCB (printed circuit board) for the purposes of this application should be construed as a board mechanically supporting and electrically connecting electrical or electronic components using conductive tracks.

Components (in this case preferably LEDs) are generally soldered onto the PCB to both electrically connect and mechanically fasten them to it.

A PCB element should be interpreted as an element comprising a PCB.

All aspects of the invention outlined in the present document may be arbitrarly combined. In particular, features of the claims my be combined with one another in an arbitrary manner.

### Brief description of the figures

Fig. 1 is a isometric view of a hydroponic system of prior art
Fig. 2 is a isometric view of the hydroponic system comprising the mounting system components and the mounting system according the invention
Fig. 3 is a side view of the hydroponic system comprising the mounting system components and the mounting system according the invention
Fig. 4 is an exploded view of the mounting system component
Fig. 5 is a isometric view of the coupling element and the counter-coupling element of the mounting system component
Fig. 6 is a plan view of the connected mounting system components
Fig. 7 is a isometric view of the mounting system component according to another embodiment of the invention

### Detailed description

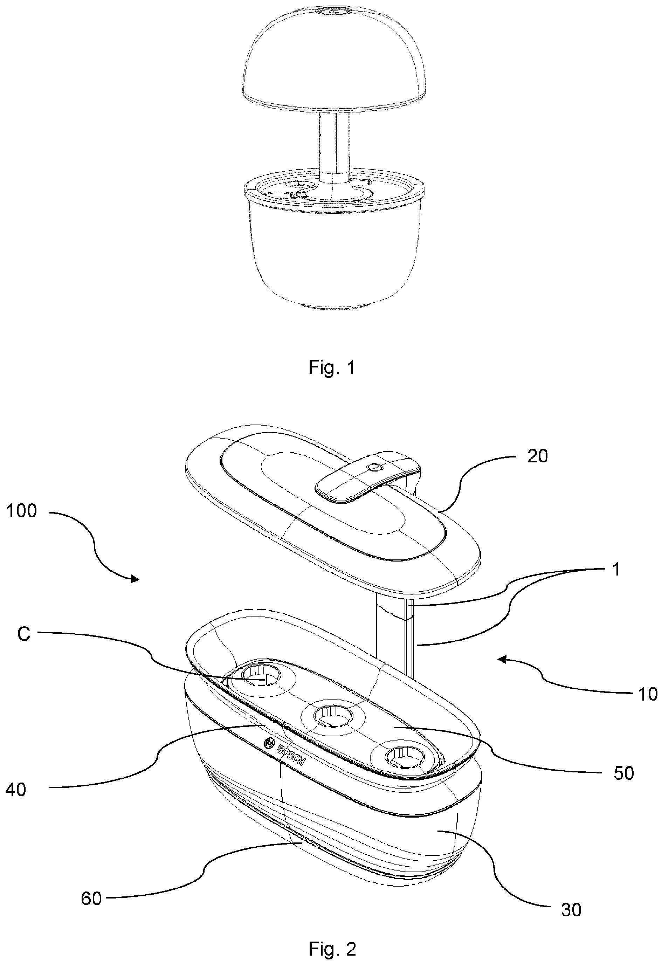

Fig. 1 depicts a hydroponic appliance that forms part of the prior art. A lighting system including several LED lamps is provided in the upper part of the appliance. The lighting system is supported by a central pillar comprised of at least one supporting or height module. The lower part of the pillar is integrated in a plant tray in which capsules for growing plants are arranged. The plant tray is placed on a watering tank which includes a pump unit for pumping water (not shown) from the tank to the plant tray. The capsules contain substrate (for instance rockwool) in which plants can grow. Water which can contain nutrients (fertilizers), for instance nitrogen, phosphorus, potassium, keeps the substrate wet. The pillar is positioned centrally with regard to the plant tray.

Fig. 2 shows a hydroponic system 100 comprising mounting system components 1 forming a mounting system 10 according to the invention. The system 100 is placed on a base 60. The base 60 comprises a drive (not shown) including a electric motor. A coupling is provided for transferring movement and torque from the drive to a pumping unit having a pump (not shown) and being arranged in a watering tank 30. The watering tank 30 for holding water is positioned on the base 60. Water is pumped from the watering tank 30 to a capsule holder 50 which can be integral with a plant tray 40. The capsule holder 50 supports capsules C comprising substrate in which a seed is placed (first stage of plant growth). A lighting assembly 20 is supported by the mounting system 10.

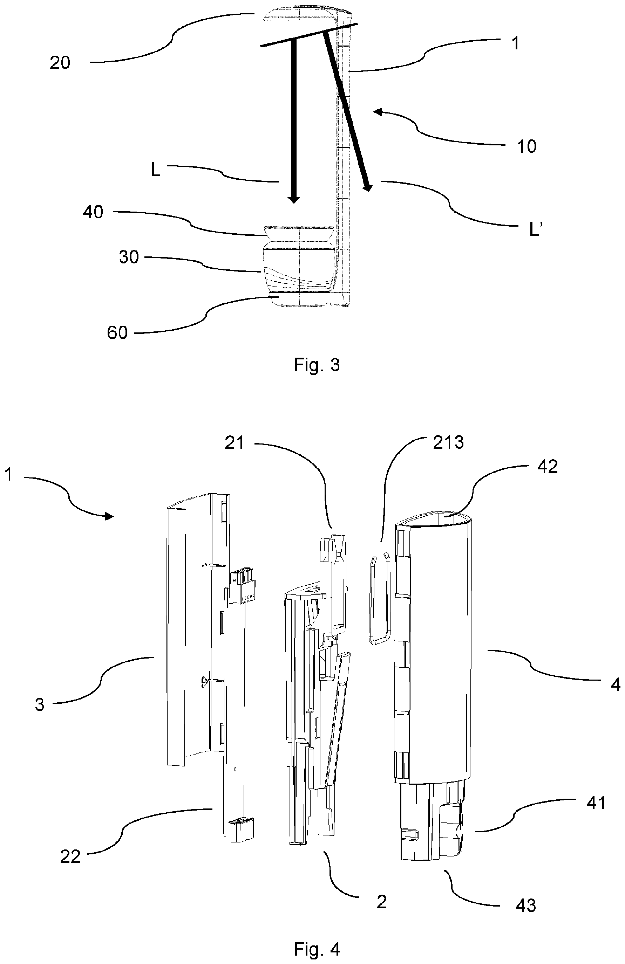

The mounting system 10 and its mounting system components 1 provide power for the lighting assembly 20 comprising lights sources, preferably LEDs. Power is transmitted by means of PCB elements 22 (as seen in Fig. 4) connected to each other enabling electrical connection. LEDs are preferably red, blue and green LEDs or any combination thereof. Electrical cable (not shown) is provided for connecting the hydroponic system 100 to mains.

Fig. 3 depicts the hydroponic system 100 in a side view. The mounting system 10 is arranged outside of the plant tray 40 on the side or a circumference thereof and of the base 60. The first mounting system component 1 (as seen from the bottom) is coupled to the corresponding part on the base 60. The last mounting system component 1 is coupled to the corresponding part on the lighting assembly 20. The mounting system components 1 are connected in order to make the mounting system 10 higher (longer) thereby raising the lighting assembly 20 and adapting it to the growth of the plants.

The watering tank 30 is positioned on the base 60. Shown are two different situations (represented by arrows). In the first one the mounting system 10 constituted of mounting system components 1 is not able to support the lighting assembly 20 properly. Therefore, the mounting system 10 and the lighting assembly 20 are inclined (not shown). The result is light L' directed substantially away from the plant tray 40. This is certainly an unwanted situation that should be avoided at all cost. With mounting system components 1 according to the invention this problem is solved. Namely, they provide a greater stiffness of the mounting system 10 as a whole so that it remains substantially perpendicular to a plane of the plant tray 40. Thus, in the second situation light L is directed directly on the plant tray 40.

Fig. 4 shows the mounting system component 1 with its main components in an exploded view.

A PCB element holder 2 is configured to hold a PCB element 22 provided with a connector on each of its ends. A reinforcing means 213 is intended to be attached to a coupling element 21 to increase its stiffness. The PCB element holder 2 with the attached PCB element 22 and the reinforcing means 213 form a component to be inserted in a housing 4. The housing 4 is to be covered by a cover 3, preferably in a form-fitting manner. On one end of the housing 4 a recess 42 is formed. In the recess 42 the connector of the PCB element 22 and the coupling element 21 of the PCB element holder 2 (not shown) are arranged. The recess 42 of the mounting system component 1 is to be coupled to a projection 43 of another mounting system component 1 to form a connection, preferably in a releasable manner. More precisely, the coupling element 21 of the PCB element holder 2 is to be coupled with a counter-coupling element 41 of the housing 4. The PCB element 22 is positioned on the side of the PCB element holder 2 facing the cover 3.

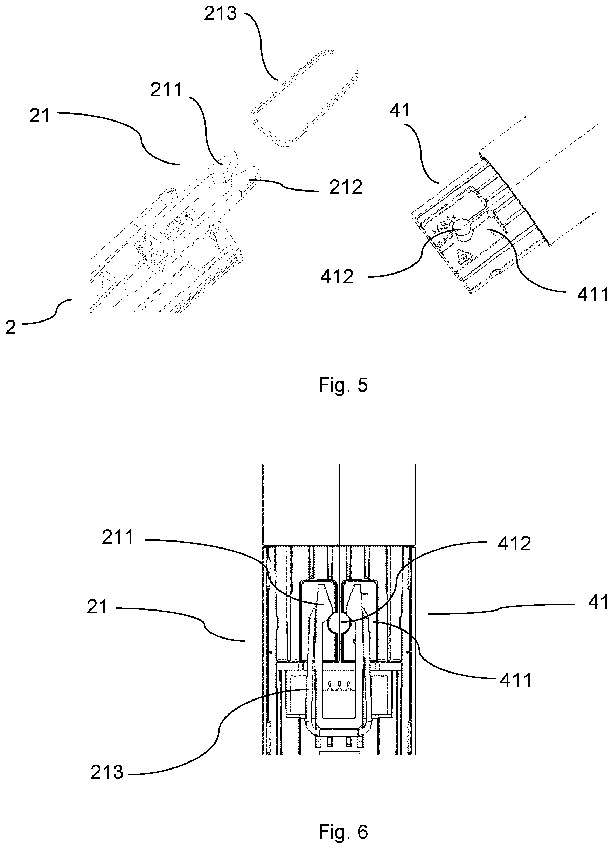

Fig. 5 depicts the coupling element 21 and the counter-coupling element 41. The coupling element 21 forms part of the PCB element holder 2. The hookalike portions 211 of the coupling element 21 are to be inserted in the recesses 411 of the counter-coupling element 41. A pair of the hookalike portions 211 is to be engaged with an anchoring element 412 of the counter-coupling element 41. More precisely, upon engagement the upper section of each of the hookalike portions 211 partly encompasses the outer surface of the anchoring element 412 being substantially of a cylindrical shape. The reinforcing means 213, preferably a U-formed spring, is to be arranged on the circumference of the hookalike portions 211 and adjacent the regions coupling them to the PCB element holder 2 in order to increase stiffness of the hookalike portions 211, i.e. the coupling means 21. Regions forming ends of a U-formed spring are inserted in respective recesses 212 of the pair of the hookalike portions 211 of the coupling element 21. Upon coupling the coupling element 21 to the counter-coupling element 41 hookalike portions 211 move past the anchoring element 412 thereby generating an audible signal confirming a safe connection is established.

Fig. 6 depicts a pair of mounting system components 1 connected with each other. The coupling element 21 of a first mounting system component 1 is coupled with the counter-coupling element 41 of a second mounting system component 1. The hookalike portions 211 of the coupling element 21 are inserted in the recesses 411 of the counter-coupling element 41. A pair of the hookalike portions 211 is engaged with the anchoring element 412 of the counter-coupling element 41. More precisely, the upper section of each of the hookalike portions 211 partly encompasses the outer surface of the anchoring element 412. The reinforcing means 213 is arranged on the circumference of the hookalike portions 211 and adjacent the regions coupling them to the PCB element holder 2. Thereby, the connection between the neighbouring mounting system components 1 stiffens and provides more security with increased height of the mounting system 10 supporting the lighting assembly 20.

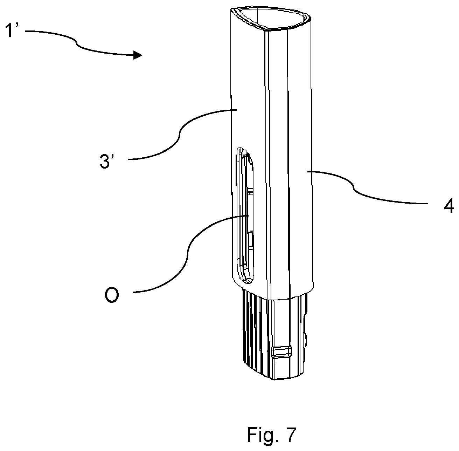

Fig. 7 shows a mounting system component 1' according to another embodiment of the invention. This mounting system component 1' comprising an opening O is intended for lighting plants grown in the hydroponic system 100. That being said, it provides further lighting to that provided by the lighting assembly 20. This is important as with fully developed or grown plants almost no light comes to the plants from the side. Opening O in the cover 3' can be covered with a transparent lid. The PCB element of this embodiment comprises not only electrical connections (leads) for power supply of the LEDs of the lighting assembly 20 but also light sources preferably in a form of LEDs. These LEDs facing the opening O provide light to the plants from the side. If housing 4 is provided with an opening it can be used in both embodiments.

### Reference signs list

1, 1' mounting system component
2 PCB element holder
3, 3' cover
4 housing

10 mounting system
20 lighting assembly
21 coupling element
22 PCB element
30 watering tank
40 plant tray
41 counter-coupling element
42 recess
43 projection
50 capsule holder
60 base
100 hydroponic system
211 hookalike portions
213 reinforcing means
411 recess
412 anchoring element

C capsule
L, L' light
O opening

## Claims

1. Mounting system component (1) for a hydroponic system (100) comprising:
- a PCB element (22),
- a PCB element holder (2) configured to receive the PCB element (22),
- a cover (3),
- a housing (4) configured to receive the PCB element holder (2) with the PCB element (22),
**characterised in that** the mounting system component (1) comprises a coupling element (21) and a counter-coupling element (41) configured to establish a releasable connection.

2. Mounting system component (1) according to claim 1, **characterised in that** the coupling element (21) forms part of the PCB element holder (2).

3. Mounting system component (1) according to claim 1 or claim 2, **characterised in that** the counter-coupling element (41) forms part of the housing (4).

4. Mounting system component (1) according to any of the preceding claims, **characterised in that** the coupling element (21) is provided with a reinforcing means (213).

5. Mounting system component (1) according to claim 4, **characterised in that** the reinforcing means (213) is a U-formed spring.

6. Mounting system component (1) according to any of the preceding claims, **characterised in that** the coupling element (21) is integral with the PCB element holder (2).

7. Mounting system component (1) according to any of the preceding claims, **characterised in that** the counter-coupling element (41) comprises at least one recess (411) and an anchoring element (412).

8. Mounting system component (1) according to any of the preceding claims, **characterised in that** the coupling element (21) comprises at least one hookalike portion (211).

9. Mounting system component (1) according to any of the preceding claims, **characterised in that** the PCB element (22) comprises at least one electrical connector.

10. Mounting system component according to any of the preceding claims, **characterised in that** the cover (3) comprises at least one opening (O).

11. Mounting system component (1') according to claim 10, **characterised in that** the PCB element (22) comprises at least one light source.

12. Mounting system component (1') according to claim 11, **characterised in that** the light sources are of different colour.

13. Mounting system component (1') according to claims 11 - 12, **characterised in that** the light source is a LED.

14. Mounting system (10) comprising at least one mounting system component (1) according to claims 1-9 and/or at least one mounting system component (1') according to claims 10-13.

15. Hydroponic system (100) comprising:
- a watering tank (30),
- a plant tray (40),
- a lighting assembly (20), and
- a mounting system (10) according to claim 14.
